# EUROPEAN PATENT APPLICATION

(11) **EP 1 071 304 A1**
(43) Date of publication of application: **24.01.2001**
(21) Application number: 00305864.1
(22) Date of filing: 11.07.2000
(51) Int. Cl.: H04Q 7/38

(54) **Method and apparatus for efficiently paging a mobile terminal in a cellular network**

(30) Priority: 23.07.1999 US 360012
(71) Applicant: LUCENT TECHNOLOGIES INC., Murray Hill, New Jersey 07974-0636 (US)
(72) Inventor: Bhat, Kabekode Venkata Subramanya, Naperville, Illinois 60564 (US)
(74) Representative: Buckley, Christopher Simon Thirsk

(57) **Abstract**

A method for locating a mobile terminal in a wireless telecommunications network includes retrieving historical data associated with the whereabouts of the mobile terminal. The historical data is used to issue a paging signal to the mobile terminal to those base stations associated with the geographic areas in which the mobile terminal is most likely to be found. By intelligently issuing the paging signal, wireless telecommunications network resources are conserved while the likelihood of locating the mobile terminal is enhanced.

A trace pattern database is updated each time a mobile terminal is located, or, in accordance with a predefined algorithm, is stored in the wireless telecommunications network. Advantageously, flexibility is provided to the wireless telecommunications service provider in determining the frequency with which the trace pattern database is updated and hence, the accuracy of the database.

## Description

### Technical Field:

This invention relates to wireless networks and, more particularly, to using historical data to locate a particular mobile terminal in a wireless network.

### Background of the Invention:

Wireless telephony has experienced explosive growth over the past decade. This growth is due, in part, to the remarkable reliability of modern wireless networks and decreasing costs associated with mobile terminals. The abundance of mobile terminals and their ease of use makes conversing while performing other activities (e.g., driving, walking, shopping or dining in a restaurant) a commonplace occurrence in today's society. What most mobile terminals users do not realize, however, is that use of the convenient, portable mobile terminal is enabled by a complex infrastructure and signaling protocols which are deployed each time a call is placed or received.

In wireless networks, such as the Lucent Technologies Inc. Flexent™ system, a call destined for a mobile terminal requires paging (that is, locating) of the mobile terminal. Paging a mobile terminal is a process whereby a signal is broadcast to all cells in a wireless network in an effort to elicit a location-identifying response from the mobile terminal for call delivery. Conventional protocols require a mobile switching center to extend a paging message to all base station (or cells) served by a network. The broadcast paging message is issued until the target mobile terminal responds, indicates it is busy, or a preestablished time period expires.

Paging a mobile terminal consumes integral system resources, such as transmission link or channel bandwidth resources, and occupies key nodes in the wireless network. Paging channel bandwidth is a critical resource at the air interface level and can greatly affect system capacity. In a system with large mobile termination call rates (e.g., in excess of 50), paging channel bandwidth restraints create a bottleneck in the call delivery process. The paging bottleneck also inhibits growth of the wireless network because expansion requires expensive, time consuming changes in network hardware and software.

### Summary of the Invention:

It is recognized that there is a need for greater efficiency while locating mobile terminals for call processing. This need is addressed and a technological advance is achieved in the wireless telecommunications art by using a trace pattern during the paging process. The trace pattern is defined using historical information about base stations which previously handled call origination, termination, handoffs or transmission for a particular mobile terminal. A detailed trace pattern also includes time stamps for identifying base stations which participated in a call at a certain time. Trace patterns are stored in a database to create a record of information for each registered mobile terminal. The database is updated in real time (or periodically) so that information about base station association patterns for each mobile terminal are accurate.

More particularly, a trace pattern for each mobile terminal (identified by a mobile terminal identification number) is used to create a historical, geographical listing of base stations which have serviced a call. Using the trace pattern, paging requests for a particular mobile terminal are sent, initially, to those base stations where the mobile terminal is most likely to be found. In this manner, broadcast paging messages are no longer always required. Instead, a more intelligent and refined paging message is sent to particular geographic sites for locating a mobile terminal. Advantageously, paging channel bandwidth is conserved while the likelihood of finding a particular mobile terminal is enhanced.

### Brief Description of the Drawings:

FIG. 1 is a simplified block diagram of a wireless network in which the present invention may be practiced;
FIG. 2 is a block diagram of a wireless network including a trace pattern for mobile terminals;
FIG. 3 is a trace pattern database record as may be stored in a database within a wireless network;
FIG. 4 is a flow diagram illustrating the steps performed in a wireless network for paging a mobile terminal using trace pattern information; and
FIG. 5 is a flow diagram illustrating the steps performed in a wireless network for updating a trace pattern.

### Detailed Description:

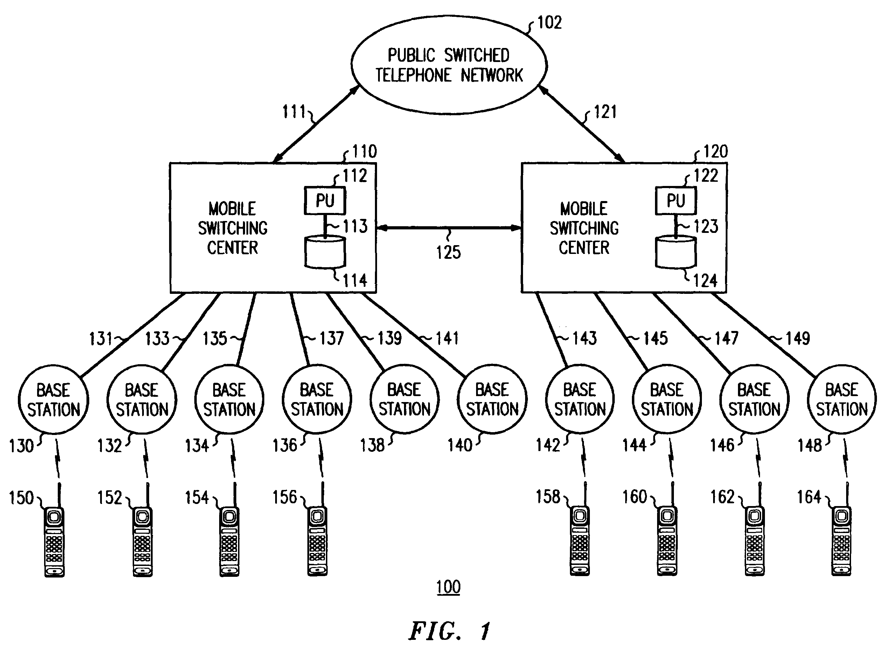

FIG. 1 is a simplified block of a wireless telecommunications network in which the method of the present invention may be practiced. Although the network described is the Lucent Technologies Inc. Flexent™ system, those skilled in the art will recognize that this is an illustrative embodiment and numerous other configurations may be deployed.

Wireless telecommunications network 100 is part of the greater public switched telephone network (PSTN) 102 which includes mobile switching centers 110 and 120. Each mobile switching center is interconnected to the PSTN via established links 111 and 121, respectively. The links are bi-directional and transmit information to and from wireless network 100 and the PSTN.

Mobile switching center 110 includes processing unit 112 interconnected to database 114 via link 113. In the preferred embodiment, database 114 stores a trace pattern database update algorithm. In this embodiment, mobile switching center 110 serves a plurality of base stations 130, 132, 134, 136, 138 and 140. Mobile switching center 110 is interconnected to each base station via control link 131, 133, 135, 137, 139 and 141, respectively. In this example, base station 130 serves mobile subscriber 150, base station serves mobile subscriber 152, base station 134 serves mobile subscriber 154 and base station 136 serves mobile subscriber 156. Mobile station 110 is interconnected to mobile station 120 via control link 125. Mobile switching center 120 includes processing unit 122 interconnected to database 124 via link 123. Mobile switching center 120 serves base stations 142, 144, 146 and 148 via established control links 143, 145, 147 and 149. In this embodiment, base stations 142, 144, 146 and 148 serve mobile terminals 158, 160, 162 and 164 respectively.

Conventionally, an incoming call destined for a particular mobile terminal (for example, mobile terminal 156) is received at mobile switching center 110 which issues a broadcast paging message to all base stations in wireless network 100. In other words, to locate mobile terminal 156, mobile switching center 110 broadcasts a paging message to all base stations (that is, base station 130, 132, 134, 136, 138, 140, 142, 144, 146 and 148) for determining the precise base station and equipment serving mobile terminal 156 at a particular instant in time. Broadcast paging occupies a significant amount of system resources.

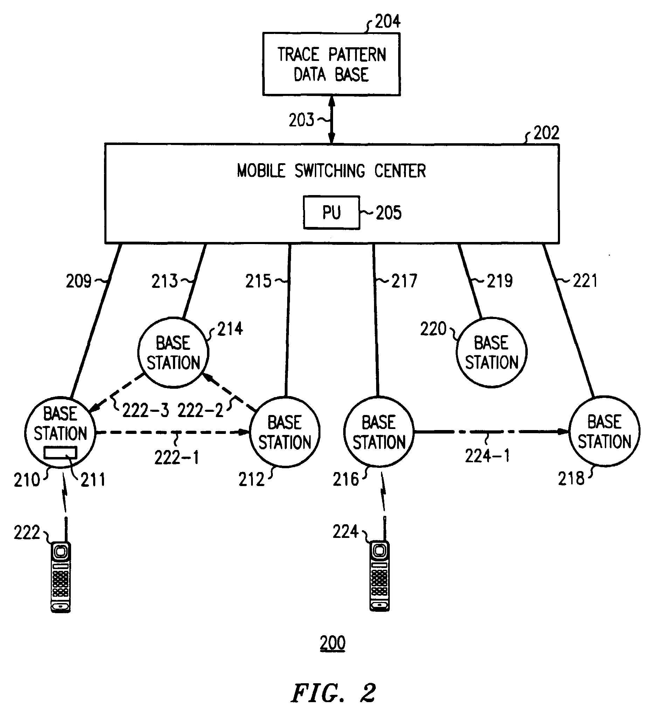

FIG. 2 is a more detailed block diagram of a mobile switching center and base station system in which the present invention may be practiced. In this embodiment, mobile switching center 202 is interconnected to stand-alone trace pattern database 204 via link 203. The mobile switching center includes processing unit 205 for administering (and storing) a trace pattern database update algorithm which is described below.

This particular mobile switching center serves base stations 210, 212, 214, 216, 218 and 220 via links 209, 213, 215, 217, 219 and 221, respectively. Mobile terminal 222 is currently served by base station 210. Base station 210 also includes processing unit 211 for administering trace pattern updates. Although processing units are not shown in all base stations, they may be included therein. Dashed lines 222-1, 222-2 and 222-3 indicate the mobile terminal 222 travels to geographic locations served by base stations 212 and 214. Accordingly, a trace pattern for mobile terminal 222 includes base stations 210, 212 and 214 since these base stations provide wireless service for mobile terminal 222. Similarly, mobile terminal 224 is presently served by base station 216 but travels to a geographic area served by a base station 218. Mobile terminal 224's travel pattern is denoted by dashed and dotted line 224-1 indicating base stations 216 and 218 serve mobile terminal 224. Accordingly, if mobile switching center 202 needs to locate mobile terminal 222, information from trace pattern database 204 determines that the mobile terminal is most likely to be found in the geographic locations served by base stations 210, 212 or 214. Therefore, mobile switching center 202 maximizes efficiency by issuing paging messages to only those base stations where the mobile is likely to be found instead of sending a broadcast message to all base stations served by the wireless telecommunications network. In alternative embodiments, information in trace pattern database 204 is indexed by time of day for coordinating base station location with mobile terminal travel patterns.

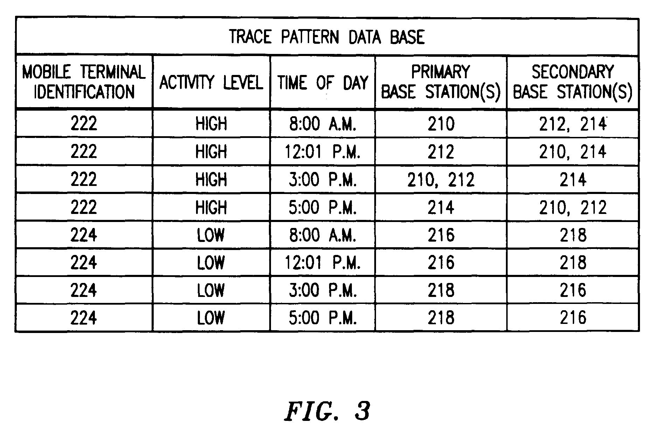

FIG. 3 is a visual representation of data contained in a trace pattern database, such as trace pattern database 204. In this representation, mobile terminal identification is simply the mobile terminal reference numerals used to identify mobile terminals in FIG. 2. The mobile terminal identification may be a subscriber issued identity number, or the mobile identification number also known as "MIN". The trace pattern database can store all types of subscriber-specific information including an activity level gauge. The activity level gauge is a determination of whether the mobile is likely to travel (e.g., a high activity level) or stay in one geographic location The time of day, primary serving base station and secondary serving base stations are also included in the illustrative trace pattern database record. The primary base station is the base station representing the geographic area in which the mobile terminal is most likely to be found. Primary base stations normally serve the geographic area in which the user of the mobile terminal resides or works. Secondary base stations serve the geographic areas in which the mobile terminal is frequently found.

In this example of a trace pattern database record, mobile terminal 222 is most likely to be found in the geographic area associated with primary base station 210 at 8:00 in the morning. In some instances, this mobile terminal may also be found in the geographic areas associated with secondary base stations 212 or 214. As indicated in FIG. 3, mobile terminal 222 has a "high" activity level and frequently roams to various combinations of base stations 210, 212 and 214 according to time of day. For example, at 3:00 p.m., mobile terminal 222 is most likely found in the geographic areas associated with primary base stations 210 or 212 but may also be found in the geographic area associated with secondary base station 214. This activity may correlate, for example, with the mobile user leaving a residence located in the geographic area associated with base station 210 to pick up a child who attends a school in a geographic area associated with base station 212. Also shown in FIG. 3 is the trace pattern for mobile terminal 224, a low activity level mobile terminal. Mobile terminal 224 can be found in the geographic area associated with base station 216 or 218, depending on the time of day.

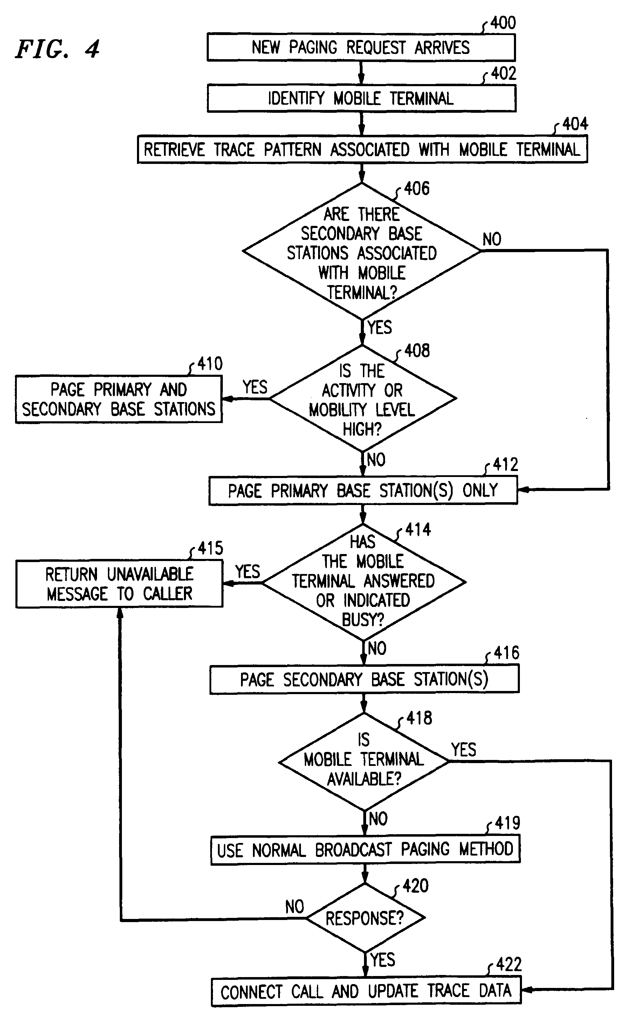

FIG. 4 is a flow diagram illustrating the steps performed in a wireless telecommunications network, such as wireless telecommunications network 100, for paging a mobile terminal in accordance with the present invention.

The process begins in step 400 in which a new paging request arrives in a mobile switching center. In step 402, the mobile switching center identifies the mobile terminal to which the paging request is directed. All paging requests assume that a call must be delivered to a mobile terminal which is served by the mobile switching center. In step 404, the mobile switching center retrieves a trace pattern record associated with the mobile terminal to which the paging request is directed. This trace pattern may be stored in an internal database such as mobile switching center database 114 (shown in mobile switching center 110) or may be stored in an external trace pattern database such as trace pattern database 204 shown in FIG. 2. If no trace pattern record exists for a mobile terminal, a trace pattern record is created.

In decision step 406, the mobile switching center determines if there are any secondary base stations associated with the mobile terminal, as identified from information retrieved from its trace pattern database. If the outcome of decision step 406 is a "YES" determination, the process continues to decision step 408 in which the mobile switching center determines if the activity level associated with the mobile terminal is high. If the outcome of decision step 408 is a "NO" determination, the process continues to step 412 described below. If the outcome of decision step 408 is a "YES" determination, the mobile switching center issues a paging message to primary and secondary base stations associated with the identified mobile terminal in step 410 and the process continues to step 414. Primary and secondary base stations are paged since the mobile terminal is likely to travel. If the outcome of decision step 406 is a "NO" determination, the process continues to step 412 in which the mobile switching center pages only the primary base station associated with the mobile terminal. By paging only the primary base station(s), the mobile switching center presumes that the low activity level mobile terminal is likely to be found in the geographic area associated with the primary base station.

In decision step 414, the mobile switching center determines whether the mobile terminal has responded, indicated it is busy or a default paging time period has expired in response to the initial page. If the outcome of decision step 414 is a "YES" determination, the mobile switching center returns an unavailable message to the caller in step 415. If the outcome of decision step 414 is a "NO" determination, the process continues to step 416 in which the mobile switching center pages secondary base station(s) associated with the mobile terminal. In decision step 418, the mobile switching center determines if the mobile terminal has responded. If the outcome of decision step 418 is a "NO" determination, the process continues to step 419 in which the mobile switching center uses conventional broadcast paging methods to locate the mobile terminal. The process continues to step 420 in which the mobile switching center determines if there has been a response from the mobile terminal. If the outcome of decision step 420 is a "NO" determination, the process returns to step 415 described above, If the outcome of decision step 419 is a "YES" determination, and similarly, if the outcome of decision step 420 is a "YES" determination, the process ends in step 422 in which the mobile switching center connects the incoming call to the located mobile terminal. The trace pattern database is also updated to identify the base station in which the mobile terminal was found.

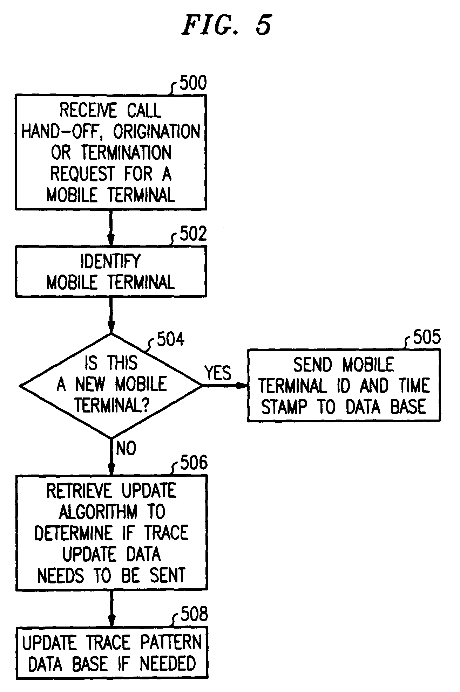

FIG. 5 illustrates the steps performed in a wireless telecommunications network for maintaining and updating records in a trace pattern database. The process begins in step 500 in which a mobile switching center receives a call handoff, origination or termination request for a particular mobile terminal. In step 502, the mobile switching center identifies the mobile terminal to which the call processing request is directed. This identification may be issued by a wireless service provider or may be the mobile identification number.

In decision step 504, the mobile switching center determines if this is a new (as opposed to a previously identified) mobile terminal. If the outcome of decision step 504 is a "YES" determination, the process continues to step 505 in which the mobile identification number and time stamp is sent to the trace pattern database for establishing a record for the mobile terminal. If the outcome of decision step 504 is a "NO" determination, the process continues to step 506 in which the mobile switching center retrieves a trace pattern database update algorithm for determining if a trace database record update is required. In alternative embodiments, the base station stores the update algorithm and directs the mobile switching center to update the trace pattern database, if needed. Also, the base station may update the trace pattern database directly. The trace pattern database update algorithm is defined by the wireless service provider maintaining the network or is a default setting established by the equipment manufacturer. Ideally, the trace pattern update algorithm updates the trace pattern database in real time (that is, each time a mobile terminal is located at a base station). The database may also be updated periodically based on the activity level of the mobile terminal, the time of day, or some other specified interval. In step 508, the trace pattern database is updated, if needed.

Advantageously, wireless network resources are conserved by intelligently paging a mobile terminal using historical data. More particularly, by tracking mobile terminal location and using data to selectively page the mobile terminal, paging channel bandwidth is conserved and the ability to locate a particular mobile terminal is enhanced. Further, wireless network flexibility is provided by allowing the update frequency of a trace pattern database to be altered so that information stored in the trace pattern database is updated depending on the needs of the system.

Although this invention has been described with respect to a preferred embodiment, those skilled in the art may devise numerous other arrangements without departing from the scope of the invention as defined in the following claims.

## Claims

1. In a wireless telecommunications network, a method for paging a mobile terminal comprising the steps of:
retrieving a trace pattern of the mobile terminal;
using the trace pattern to identify an area where the mobile terminal has been previously located; and
issuing a paging signal to the area where the mobile terminal has been located.

2. The method of claim 1 further comprising:
identifying other areas where the mobile terminal has been previously located;
and
issuing a paging signal to the other areas.

3. The method of claim 1 wherein retrieving a trace pattern includes the step of:
accessing a database indexed by mobile identification number.

4. A wireless telecommunications system comprising:
a mobile switching center interconnected to a plurality of base stations;
means for storing historical data relating to the locations of mobile terminals served by the base stations; and
means for issuing a paging signal to the mobile terminal based on the historical data of the previous locations.

5. The wireless telecommunications network of claim 4 wherein the means for storing historical data is a trace pattern database located within the mobile switching center.

6. The wireless telecommunications network of claim 4 wherein the means for storing historical data is a database interconnected to the mobile switching center.

7. The wireless telecommunications network of claim 6 wherein the database includes information regarding the amount of travel typically associated with a particular mobile terminal.

8. The wireless telecommunications network of claim 6 wherein the database is indexed by mobile identification number.

9. A base station comprising:
means for acknowledging a mobile terminal within a geographic area served by the base station; and
means for extending identity of the mobile terminal to a trace pattern database.

10. In a wireless telecommunications network, a method for keeping track of the location of a mobile terminal comprising the steps of:
receiving a call processing request in a base station of the wireless telecommunications network;
executing the call processing request; and
sending an identification of the base station and a mobile terminal associated with the call processing request to a trace pattern database.

11. The method of claim 10 further comprising:
sending the base station identification and mobile terminal identification to the trace pattern database each time a call processing request is received.

12. The method of claim 10 further comprising the step of:
sending the base station identification and mobile terminal identification to the
trace pattern database on a periodic basis in accordance with an algorithm.

13. The method of claim 10 further comprising:
using historical data stored in the trace pattern database to intelligently issue paging signals for the mobile terminal each time a call processing request is received.

14. A trace pattern database comprising:
means for identifying mobile terminals;
activity levels associated with the mobile terminals identified and locations where the mobile terminal is most likely to be found.

15. The trace pattern database of claim 14 wherein the locations where the mobile terminal is most likely to be found is a primary base station.

16. The trace pattern database of claim 14 wherein the means for identifying the mobile terminal is a mobile identification number.
